# FASCICULE DE BREVET EUROPEEN

(11) **EP 1 813 769 B1**
(45) Date de publication et mention de la délivrance du brevet: **25.03.2009**
(21) Numéro de dépôt: 07100217.4
(22) Date de dépôt: 08.01.2007
(51) Int. Cl.: F01D 5/02, F02C 7/36

(54) **Assemblage à encombrement radial réduit entre un arbre de turbine et un tourillon d'arbre de compresseur de turbomachine**
Montage mit radial reduziertem Platzbedarf zwischen einer Turbinenwelle und einem Wellenzapfen eines Strömungsmaschinenverdichters
Assembly with reduced radial dimensions between a turbine shaft and a compressor shaft journal in a turbomachine

(30) Priorité: 27.01.2006 FR 0650289
(43) Date de publication de la demande: 01.08.2007
(73) Titulaire: SNECMA, 75015 Paris (FR)
(72) Inventeur: Guihard, Frédéric, 33700, Merignac (FR); Charier, Gilles, 77130, La Grande Paroisse (FR)
(74) Mandataire: Boura, Olivier

(56) Documents cités:
- EP-A1- 0 299 266
- DE-B- 1 087 410
- GB-A- 2 393 774
- US-A- 3 449 926
- US-A- 3 571 886
- US-A- 3 602 535

## Description

### Arrière-plan de l'invention

La présente invention se rapporte au domaine général des turbomachines dont l'arbre du corps basse-pression comporte un arbre de turbine assemblé au tourillon de l'arbre de compresseur. L'invention vise plus précisément un assemblage de ce type ayant un encombrement radial réduit.

Dans une turbomachine, les gaz provenant de la combustion d'un mélange air/carburant entraînent en rotation la turbine basse-pression. Celle-ci comporte un arbre de turbine basse-pression qui est couplé à un arbre de compresseur basse-pression afin d'entraîner en rotation le compresseur basse-pression de la turbomachine. A cet effet, l'arbre de turbine basse-pression est logé à l'intérieur d'un tourillon de l'arbre de compresseur basse-pression et est couplé à celui-ci par l'intermédiaire de cannelures. Un écrou serré sur l'extrémité aval de l'arbre de turbine basse-pression permet d'assurer une retenue axiale de cet accouplement. Plus précisément, le tourillon de l'arbre de compresseur basse-pression présente une collerette annulaire interne venant en butée radiale contre l'arbre de turbine basse-pression et en butée axiale contre l'écrou de serrage.

Ce type d'assemblage présente l'inconvénient de posséder un encombrement radial relativement important. Cet encombrement provient à la fois de l'épaisseur nécessaire pour le serrage de l'écrou sur l'arbre de turbine basse-pression et de l'épaisseur nécessaire pour obtenir une portée suffisante entre l'arbre de turbine basse-pression et le tourillon de l'arbre de compresseur basse-pression. Un tel encombrement radial est particulièrement préjudiciable dans le cas du dimensionnement d'arbres de turbine basse-pression pour une turbomachine de type contra-fan (c'est-à-dire ayant deux soufflantes contrarotatives montées à l'avant).

Le document US 3602535 décrit un assemblage axial ajustable entre les arbres du compresseur et de la turbine.

### Objet et résumé de l'invention

La présente invention a donc pour but principal de pallier de tels inconvénients en proposant un assemblage ayant un encombrement radial réduit.

Ce but est atteint grâce à un assemblage entre un arbre de turbine et un tourillon d'arbre de compresseur de turbomachine, comportant un tourillon d'arbre de compresseur sensiblement cylindrique, un arbre de turbine sensiblement cylindrique disposé à l'intérieur du tourillon d'arbre de compresseur coaxialement à celui-ci, des moyens de transmission de couple entre l'arbre de turbine et le tourillon d'arbre de compresseur et des moyens de serrage d'une extrémité aval de l'arbre de turbine sur le tourillon d'arbre de compresseur, et dans lequel, conformément à l'invention, le tourillon d'arbre de compresseur comporte une pluralité de dents s'étendant radialement depuis sa surface interne et l'arbre de turbine est muni à son extrémité aval d'une pluralité d'encoches axiales, les dents du tourillon coopérant avec les encoches de l'arbre de turbine.

Un tel assemblage permet de regrouper, sur une même épaisseur donnée, à la fois la zone nécessaire de portée entre l'arbre de turbine et le tourillon de l'arbre de compresseur, et la zone de retenue axiale. Il en résulte un faible encombrement radial par rapport aux assemblages classiques (le gain en encombrement radial atteint 5 mm environ). En outre, dans le cas d'une application à une turbomachine de type contra-fan, cet assemblage permet de faciliter les opérations de montage et de démontage de l'arbre de turbine basse-pression extérieur.

Selon une caractéristique avantageuse de l'invention, les moyens de serrage comportent un écrou serré sur un filetage formé à l'extrémité aval de l'arbre de turbine, ledit écrou comportant une pluralité d'encoches axiales formées chacune entre deux créneaux adjacents et coopérant avec les dents du tourillon d'arbre de compresseur.

De préférence, les moyens de serrage comportent en outre un anneau de blocage de l'écrou ayant une pluralité d'ouvertures coopérant avec les créneaux de l'écrou de serrage de façon à bloquer en rotation ledit écrou. Dans ce cas, les moyens de serrage peuvent également comporter un jonc pour assurer un maintien axial de l'anneau de blocage.

Chaque filet du filetage de l'extrémité aval de l'arbre de turbine est avantageusement dissymétrique par rapport à un plan radial médian de façon à réduire les efforts de flexion à l'extrémité aval de l'arbre de turbine.

L'assemblage peut également comporter une bague formant cale de réglage axial, ladite bague ayant une pluralité de dents venant se loger à la fois au fond des encoches de l'arbre de turbine et en butée axiale contre les dents du tourillon d'arbre de compresseur.

L'invention a également pour objet une turbomachine comportant un assemblage entre un arbre de turbine basse-pression et un tourillon d'arbre de compresseur basse-pression tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue partielle et en coupe longitudinale d'un assemblage selon l'invention ;
- la figure 2 est une vue en perspective et en éclaté de l'assemblage de la figure 1 ;
- la figure 3 est une vue en perspective et en écorché de l'assemblage de la figure 1 ; et
- la figure 4 est une loupe d'un détail de l'assemblage de la figure 1.

### Description détaillée d'un mode de réalisation

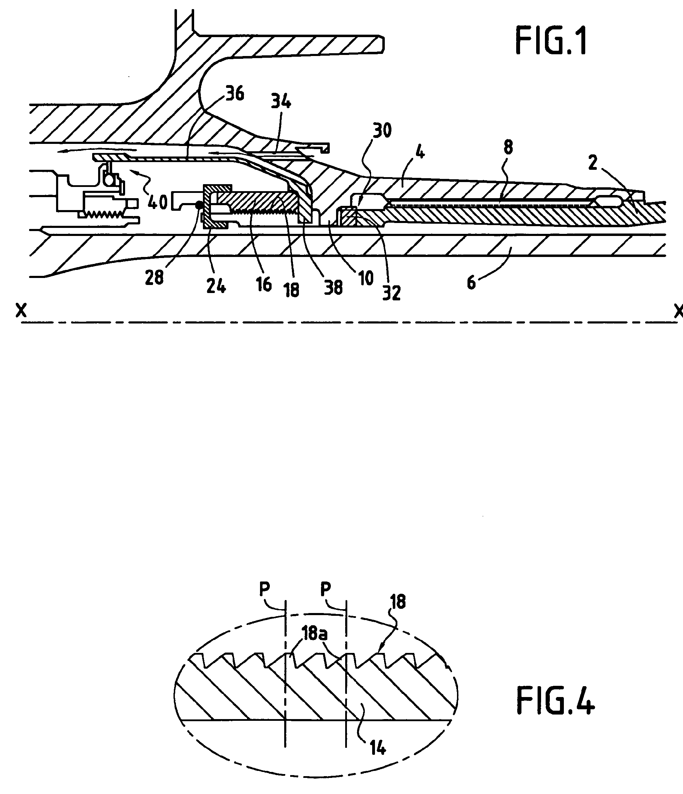

En liaison avec la figure 1, l'assemblage selon l'invention comporte un arbre de turbine 2 sensiblement cylindrique qui est centré sur un axe longitudinal X-X de la turbomachine. L'assemblage comporte également un tourillon d'arbre de compresseur 4 qui est aussi sensiblement cylindrique.

Dans le cas d'une application à une turbomachine de type contra-fan, l'arbre de turbine 2 peut par exemple être l'arbre de turbine basse-pression extérieur (par opposition à l'arbre de turbine basse-pression intérieur portant la référence 6 sur la figure 1) et le tourillon 4 peut être celui de l'arbre de compresseur basse-pression.

Bien entendu, l'invention ne se limite pas à une application à une turbomachine de type contra-fan mais s'applique à toutes turbomachines présentant ce type d'assemblage.

L'arbre de turbine 2 est disposé à l'intérieur du tourillon d'arbre de compresseur 4 coaxialement à celui-ci. De façon bien connue en soi, la transmission du couple entre l'arbre de turbine 2 et le tourillon 4 est réalisée au moyen de cannelures 8.

Selon l'invention, le tourillon d'arbre de compresseur 4 comporte une pluralité de dents 10 s'étendant radialement depuis sa surface interne et l'arbre de turbine 2 est muni à son extrémité aval d'une pluralité d'encoches axiales 12, les dents 10 du tourillon 4 coopérant avec les encoches 12 de l'arbre de turbine.

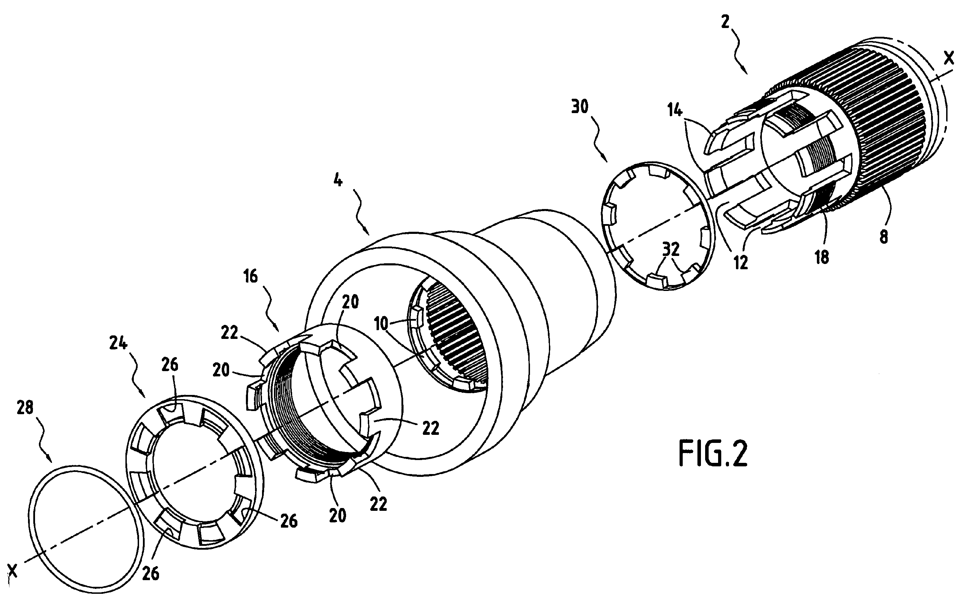

Plus précisément, comme représenté sur la figure 2, chaque encoche 12 de l'arbre de turbine 2 est formée entre deux créneaux 14 (ou crans) adjacents qui prolongent l'extrémité aval de l'arbre de turbine. Ces créneaux 14 sont régulièrement répartis sur toute la circonférence de l'arbre de turbine.

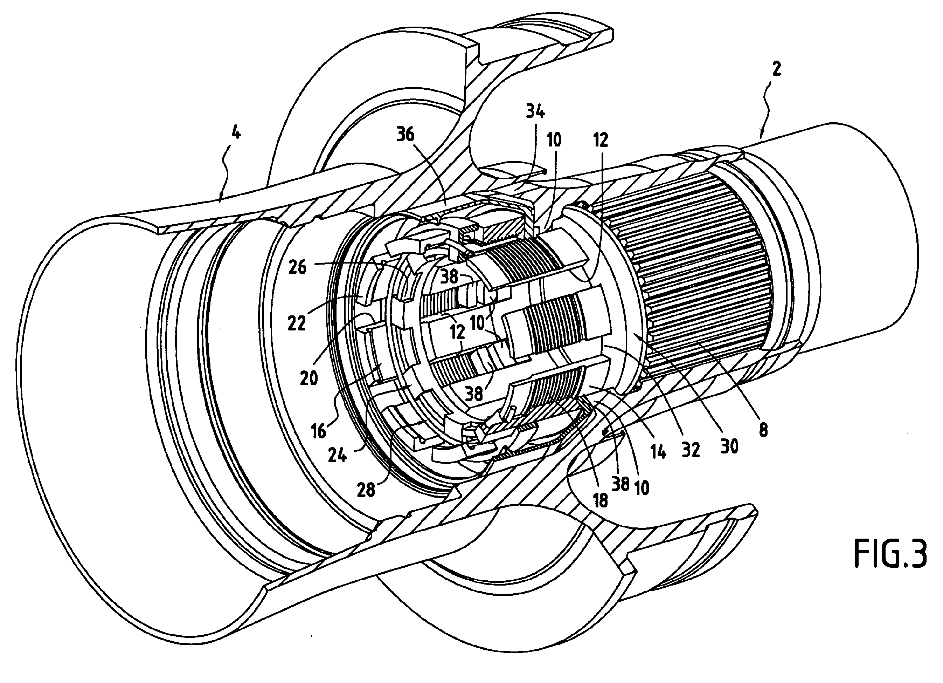

En outre, comme représenté sur la figure 3, les encoches 12 sont dimensionnées pour recevoir chacune une dent 10 du tourillon de l'arbre de compresseur 4.

On notera qu'il n'est pas indispensable que les découpes pratiquées à l'extrémité aval de l'arbre de turbine 2 pour former les encoches 12 soient réalisées sur toute l'épaisseur de l'arbre : au contraire des représentations des figures 1 à 3, les encoches pourraient en effet posséder une certaine épaisseur de façon à rigidifier l'extrémité aval de l'arbre de turbine (cette extrémité présenterait ainsi une épaisseur continue sur toute la circonférence de l'arbre).

L'assemblage selon l'invention comporte également des moyens de serrage de l'extrémité aval de l'arbre de turbine 2 sur le tourillon d'arbre de compresseur 4.

De tels moyens de serrage se présentent sous la forme d'un écrou 16 serré sur un filetage 18 formé à l'extrémité aval de l'arbre de turbine 2 (c'est-à-dire formé au niveau des créneaux 14 de celui-ci).

L'écrou 16 comporte une pluralité d'encoches axiales 20 régulièrement réparties qui sont formées chacune entre deux créneaux 22 adjacents prolongeant l'extrémité aval de l'écrou. Ces encoches 20 coopèrent avec les dents 10 du tourillon d'arbre de compresseur 4, c'est-à-dire qu'elles sont dimensionnées pour recevoir chacune l'une de ces dents.

De préférence, les moyens de serrage comportent en outre un anneau 24 de blocage en rotation de l'écrou 16. Cet anneau présente une pluralité d'ouvertures 26 régulièrement réparties sur sa circonférence et coopérant avec les créneaux 22 de l'écrou de serrage (c'est-à-dire qu'elles sont dimensionnées pour recevoir chacune l'un de ces créneaux).

L'écrou de serrage 16 permet de maintenir axialement l'arbre de turbine 2 sur le tourillon de l'arbre de compresseur 4, tandis que l'anneau 24 bloque l'écrou en rotation. Comme représenté sur la figure 1, un jonc 28 logé dans une gorge (non représentée) formée à l'extrémité amont de l'écrou de serrage 16 permet de façon avantageuse d'assurer un maintien axial en position de l'anneau de blocage 24.

Selon une caractéristique particulièrement avantageuse de l'invention, chaque filet 18a du filetage 18 formé à l'extrémité aval de l'arbre de turbine 2 est dissymétrique par rapport à un plan radial médian P. Comme représenté sur la figure 4, le plan P est un plan qui est médian par rapport à chaque filet 18a et radial par rapport à la géométrie sensiblement cylindrique de l'assemblage. Cette caractéristique permet de réduire les efforts de flexion des créneaux 14 à l'extrémité aval de l'arbre de turbine.

L'assemblage peut également comporter une bague 30 formant cale de réglage axial. A cet effet, une telle bague comporte une pluralité de dents 32 venant se loger à la fois au fond des encoches 12 de l'arbre de turbine 2 et en butée axiale contre les dents 10 formées sur la surface interne du tourillon d'arbre de compresseur 4. La présence de cette bague 30 permet de régler le placement axial (c'est-à-dire selon l'axe X-X) de l'arbre de turbine 2 par rapport au tourillon d'arbre de compresseur 4.

L'assemblage selon l'invention peut aussi intégrer un système de lubrification d'un palier disposé en aval de l'assemblage (un tel palier n'est pas représenté sur les figures).

Pour ce faire, le tourillon d'arbre de compresseur 4 comporte une pluralité de trous 34 pour le passage d'huile, tandis qu'un flasque annulaire 36 monté sur l'arbre de turbine 2 assure le guidage de cette huile vers le palier à lubrifier (figure 1). Pour permettre un tel montage, le flasque de guidage 36 présente une pluralité de dents 38 dimensionnées pour venir se loger dans les encoches 12 de l'arbre de turbine 2 (figure 3). Un joint à brosse 40 assure l'étanchéité avec les moyens de serrage de l'assemblage (figure 1).

L'assemblage selon l'invention possède de nombreux avantages. Il présente notamment un encombrement radial réduit. Comme représenté sur la figure 1, l'arbre de turbine 2 qui est ajouré permet, dans un plan radial, de regrouper sur une même épaisseur, d'une part la zone de portée nécessaire entre l'arbre de turbine 2 et le tourillon de l'arbre de compresseur 4, et d'autre part la zone de retenue axiale

En outre, l'assemblage selon l'invention facilite grandement les opérations de montage/démontage de l'arbre de turbine 2, notamment dans le cas d'une turbomachine de type à contra-fan.

Avec ce type de turbomachine, le montage s'effectue en montant successivement l'arbre de turbine basse-pression extérieur 2, la bague 30 formant cale de réglage axial, le tourillon d'arbre de compresseur basse-pression 4, le flasque de guidage 36, l'écrou de serrage 16, l'anneau de blocage 24 et le jonc 28.

Quant au démontage, il est obtenu en comprimant le jonc 28 pour le déplacer dans une autre gorge de l'écrou de serrage 16 afin de libérer l'anneau de blocage 24 ce qui permet de desserrer l'écrou. L'arbre de turbine basse-pression extérieur 2 peut alors être démonté sans avoir à retirer de la turbomachine l'écrou de serrage 16, l'anneau de blocage 24, le flasque de guidage 36 et le jonc 28. De la sorte, le démontage de l'arbre de turbine basse-pression extérieur 2 peut s'effectuer sans démonter le tourillon d'arbre de compresseur basse-pression 4.

## Revendications

1. Assemblage entre un arbre de turbine et un tourillon d'arbre de compresseur de turbomachine, comportant un tourillon d'arbre de compresseur (4) sensiblement cylindrique, un arbre de turbine (2) sensiblement cylindrique disposé à l'intérieur du tourillon d'arbre de compresseur coaxialement à celui-ci, des moyens (8) de transmission de couple entre l'arbre de turbine et le tourillon d'arbre de compresseur et des moyens (16, 18, 24, 28) de serrage d'une extrémité aval de l'arbre de turbine sur le tourillon d'arbre de compresseur, **caractérisé en ce que** le tourillon d'arbre de compresseur (4) comporte une pluralité de dents (10) s'étendant radialement depuis sa surface interne et **en ce que** l'arbre de turbine (2) est muni à son extrémité aval d'une pluralité d'encoches axiales (12), les dents (10) du tourillon (4) coopérant avec les encoches (12) de l'arbre de turbine (2).

2. Assemblage selon la revendication 1, **caractérisé en ce que** les moyens de serrage comportent un écrou (16) serré sur un filetage (18) formé à l'extrémité aval de l'arbre de turbine (2), ledit écrou (16) comportant une pluralité d'encoches axiales (20) formées chacune entre deux créneaux (22) adjacents et coopérant avec les dents (10) du tourillon d'arbre de compresseur (4).

3. Assemblage selon la revendication 2, **caractérisé en ce que** les moyens de serrage comportent en outre un anneau de blocage (24) de l'écrou ayant une pluralité d'ouvertures (26) coopérant avec les créneaux (22) de l'écrou de serrage (16) de façon à bloquer en rotation ledit écrou.

4. Assemblage selon la revendication 3, **caractérisé en ce que** les moyens de serrage comportent en outre un jonc (28) pour assurer un maintien axial de l'anneau de blocage (24).

5. Assemblage selon l'une quelconque des revendications 2 à 4, **caractérisé en ce que** chaque filet (18a) du filetage (18) de l'extrémité aval de l'arbre de turbine (2) est dissymétrique par rapport à un plan radial médian (P).

6. Assemblage selon l'une quelconque des revendications 1 à 5, **caractérisé en ce qu'**il comporte en outre une bague (30) formant cale de réglage axial, ladite bague ayant une pluralité de dents (32) venant se loger à la fois au fond des encoches (12) de l'arbre de turbine (2) et en butée axiale contre les dents (10) du tourillon d'arbre de compresseur (4).

7. Turbomachine comportant un assemblage entre un arbre de turbine basse-pression (2) et un tourillon d'arbre de compresseur basse-pression (4) selon l'une quelconque des revendications 1 à 6.

## Claims

1. An assembly between a turbine shaft and a trunnion of a turbomachine compressor shaft, the assembly comprising a substantially cylindrical compressor shaft trunnion (4), a substantially cylindrical turbine shaft (2) disposed coaxially inside the compressor shaft trunnion, means (8) for transmitting torque between the turbine shaft and the compressor shaft trunnion, and clamping means (16, 18, 24, 28) for clamping a downstream end of the turbine shaft to the compressor shaft trunnion, the assembly being **characterized in that** the compressor shaft trunnion (4) has a plurality of teeth (10) extending radially from its inside surface, and **in that** the turbine shaft (2) is provided at its downstream end with a plurality of axial slots (12), the teeth (10) of the trunnion (4) co-operating with the slots (12) of the turbine shaft (2).

2. An assembly according to claim 1, **characterized in that** the clamping means comprise a nut (16) tightened on a thread (18) formed at the downstream end of the turbine shaft (2), said nut (16) having a plurality of axial slots (20) each formed between two adjacent tongues (22) and co-operating with the teeth (10) of the compressor shaft trunnion (4).

3. An assembly according to claim 2, **characterized in that** the clamping means further comprise a blocking ring (24) for blocking the nut and having a plurality of openings (26) that co-operate with the slots (22) in the clamping nut (16) to prevent said nut from turning.

4. An assembly according to claim 3, **characterized in that** the clamping means further comprise a retaining ring (28) for holding the blocking ring (24) axially.

5. An assembly according to any one of claims 2 to 4, **characterized in that** each thread (18a) on the threaded downstream end of the turbine shaft (2) is asymmetrical relative to a radial midplane (P).

6. An assembly according to any one of claims 1 to 5, **characterized in that** it further comprises a ring (30) forming an axial adjustment spacer, said ring having a plurality of teeth (32) that are received both in the ends of the slots (12) in the turbine shaft (2) and in axial abutment against the teeth (10) of the compressor shaft trunnion (4).

7. A turbomachine including an assembly between a low-pressure turbine shaft (2) and a trunnion (4) of a low-pressure compressor shaft according to any one of claims 1 to 6.

## Patentansprüche

1. Verbindung zwischen einer Turbinenwelle und einem Wellenzapfen eines Verdichters einer Turbomaschine, umfassend einen im wesentlichen zylindrischen Verdichterwellenzapfen (4), eine im wesentlichen zylindrische, innerhalb des Verdichterwellenzapfens, koaxial zu diesem angeordnete Turbinenwelle (2), Mittel (8) zum Übertragen des Drehmoments zwischen der Turbinenwelle und dem Verdichterwellenzapfen sowie Mittel (16, 18, 24, 28) zum Festklemmen eines stromabwärtigen Endes der Turbinenwelle an dem Verdichterwellenzapfen, **dadurch gekennzeichnet, daß** der Verdichterwellenzapfen (4) eine Vielzahl von Zähnen (10) aufweist, die sich radial von seiner Innenseite aus erstrecken, und daß die Turbinenwelle (2) an ihrem stromabwärtigen Ende mit einer Vielzahl axialer Aussparungen (12) versehen ist, wobei die Zähne (10) des Zapfens (4) mit den Aussparungen (12) der Turbinenwelle (2) zusammenwirken.

2. Verbindung nach Anspruch 1, **dadurch gekennzeichnet, daß** die Festklemmittel eine Mutter (16) umfassen, die an einem an dem stromabwärtigen Ende der Turbinenwelle (2) ausgebildeten Gewinde (18) festgezogen ist, wobei die Mutter (16) eine Vielzahl axialer Aussparungen (20) aufweist, die jeweils zwischen zwei benachbarten Zinnen (22) ausgebildet sind und mit den Zähnen (10) des Verdichterwellenzapfens (4) zusammenwirken.

3. Verbindung nach Anspruch 2, **dadurch gekennzeichnet, daß** die Festklemmittel ferner einen Ring (24) zum Blockieren der Mutter umfassen, der eine Vielzahl von Öffnungen (26) aufweist, die mit den Zinnen (22) der Spannmutter (16) derart zusammenwirken, daß die Mutter drehgesichert ist.

4. Verbindung nach Anspruch 3, **dadurch gekennzeichnet, daß** die Festklemmittel ferner einen Ring (28) umfassen, um einen axialen Halt des Blockierrings (24) zu gewährleisten.

5. Verbindung nach einem der Ansprüche 2 bis 4, **dadurch gekennzeichnet, daß** jeder Gewindegang (18a) des Gewindes (18) des stromabwärtigen Endes der Turbinenwelle (2) in Bezug auf eine radiale Mittelebene (P) asymmetrisch ist.

6. Verbindung nach einem der Ansprüche 1 bis 5, **dadurch gekennzeichnet, daß** sie ferner einen Ring (30) umfaßt, der einen Keil zur axialen Einstellung bildet, wobei der Ring eine Vielzahl von Zähnen (32) aufweist, die sowohl am Grund der Aussparungen (12) der Turbinenwelle (2) aufgenommen werden als auch an den Zähnen (10) des Verdichterwellenzapfens (4) in axialen Anschlag gelangen.

7. Turbomaschine, die eine Verbindung zwischen einer Niederdruckturbinenwelle (2) und einem Wellenzapfen (4) eines Niederdruckverdichters nach einem der Ansprüche 1 bis 6 umfaßt.
